# EUROPEAN PATENT SPECIFICATION

(11) **EP 3 541 857 B1**
(45) Date of publication and mention of the grant of the patent: **09.09.2020**
(21) Application number: 17794983.1
(22) Date of filing: 10.11.2017
(51) Int. Cl.: C08F 110/06, C08F 4/651, C08F 4/654

(54) **CATALYST COMPONENTS FOR THE POLYMERIZATION OF OLEFINS**
KATALYSATORKOMPONENTEN ZUR OLEFINPOLYMERISATION
COMPOSANTS DE CATALYSEUR DE POLYMÉRISATION D'OLÉFINES

(30) Priority: 18.11.2016 EP 16199501
(43) Date of publication of application: 25.09.2019
(73) Proprietor: Basell Poliolefine Italia S.r.l., 20127 Milano (IT)
(72) Inventor: MIGNOGNA, Alessandro, 44122 Ferrara (IT); LIGUORI, Dario, 44122 Ferrara (IT); MORINI, Giampiero, 44122 Ferrara (IT)
(74) Representative: LyondellBasell
(86) International application number: PCT/EP2017/078934
(87) International publication number: WO 2018/091375

(56) References cited:
- WO-A1-2016/142334
- WO-A2-2006/110234

## Description

### FIELD OF THE INVENTION

The present disclosure relates to catalyst components for the polymerization of olefins, in particular propylene, comprising a Mg dihalide based support on which are supported Ti atoms and an electron donor compound containing an ester and a carbamate function. The present disclosure further relates to the catalysts obtained from said components and to their use in processes for the polymerization of olefins in particular propylene.

### BACKGROUND OF THE INVENTION

Catalyst components for the stereospecific polymerization of olefins have been disclosed in the art. Concerning the polymerization of propylene, Ziegler-Natta catalysts are used which, in general terms, comprise a solid catalyst component, constituted by a magnesium dihalide on which are supported a titanium compound and an internal electron donor compound, used in combination with an Al-alkyl compound. Conventionally however, when a higher crystallinity of the polymer is desired, also an external donor (for example an alkoxysilane) is needed in order to obtain higher isotacticity. Esters of phthalic acid, particularly diisobutylphthalate, are used as internal donors in catalyst preparations. The phthalates are used as internal donors in combination with alkylalkoxysilanes as external donor. This catalyst system gives good performances in terms of activity, isotacticity and xylene insolubility.

One of the problems associated with the use of this catalyst system is that the phthalates have recently raised some concerns which caused some compounds within this class to be classified as source of heavy health problems.

Consequently, research activities have been devoted to discover alternative classes of internal donors for use in the preparation of catalyst components for propylene polymerization.

Some of the tested catalysts contain donors structures having contemporaneously carbamic groups and ester groups. PCT Publication No. WO2006/110234 describes 1,2-amino esters derivatives including one carbamate group and one free ester function. The catalysts generated by these structures have very low activity and sterospecificity in bulk propylene polymerization (See Table 2 of PCT Publication No. WO2006/110234).

### SUMMARY OF THE INVENTION

Surprisingly, the applicant has found that a class of donors containing both a carbamate and ester function within a specific structure deriving from amino alcohol generates catalysts showing a good balance of activity and stereospecificity.

Accordingly, it is an object of the present disclosure a catalyst component for the polymerization of olefins comprising Mg, Ti and an electron donor of formula (I) 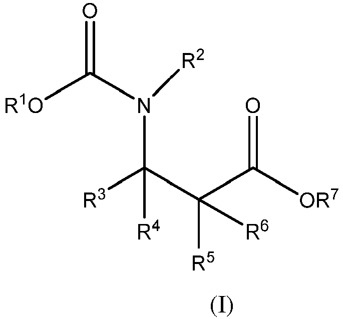 where the R¹ and R⁷ groups, equal to or different from each other, are selected from C₁-C₁₅ hydrocarbon groups, R² group is selected from C₁-C₁₀ hydrocarbon groups, R³ to R⁶ groups, independently, are selected from hydrogen or C₁-C₁₅ hydrocarbon groups which can be fused together to form one or more cycles.

### DETAILED DESCRIPTION OF THE INVENTION

In addition to carbon and hydrogen the hydrocarbon groups R¹ to R⁷ as defined above can contain a heteroatom selected from halogen, P, S, N,O and Si.

Preferably, R¹ is a C₁-C₁₀ alkyl group, more preferably a C₁-C₈ alkyl group. More preferably the alkyl group is a primary alkyl group.

Preferably, R² is selected from C₁-C₁₀ alkyl groups, more preferably it is selected from C₃-C₁₀ alkyl groups and especially from C₃-C₁₀ linear alkyl groups.

Preferably, R³ is selected from C₁-C₁₀ alkyl group, more preferably a C₁-C₈ alkyl groups and especially from linear C₁-C₈ alkyl groups. According to a specific embodiment, R³ groups are selected from C₁-C₃ linear alkyl groups when R² groups are selected from C₃-C₁₀ linear alkyl groups.

Preferably, R⁴ is a hydrogen or a C₁-C₁₀ alkyl group. More preferably R⁴ is hydrogen.

Preferred structures are those in which R³ is selected from C₁-C₁₀ alkyl group and R⁴ is hydrogen.

Preferably, R⁵ and R⁶ are hydrogen or a C₁-C₁₀ alkyl group, more preferably both R⁵ and R⁶ are hydrogen.

Preferably, R⁷ is a C₁-C₁₀ alkyl group, more preferably a C₁-C₈ alkyl group. More preferably the alkyl group is a primary alkyl group.

Preferred structures of formula (I) are those in which R¹ and R⁷ are independently a C₁-C₁₀ alkyl group, R² is selected from C₃-C₁₀ linear alkyl groups, R³ is selected from linear C₁-C₈ alkyl groups and R⁴ to R⁶ are hydrogen.

Preferably, the final amount of electron donor compound in the solid catalyst component ranges from 1 to 25% by weight preferably in the range from 3 to 20% by weight.

Non limiting examples of structures of formulas (I) are the following: ethyl 3-((ethoxycarbonyl)(ethyl)amino)butanoate, ethyl 3-((ethoxycarbonyl)(isobutyl)amino)butanoate, ethyl 3-((ethoxycarbonyl)(isopropyl)amino)butanoate, ethyl 3-((ethoxycarbonyl)(methyl)amino)butanoate, ethyl 3-((ethoxycarbonyl)(phenyl)amino)butanoate, ethyl 3-((ethoxycarbonyl)(propyl)amino)butanoate, ethyl 3-(tert-butyl(ethoxycarbonyl)amino)butanoate, ethyl 3-(butyl(ethoxycarbonyl)amino)butanoate, ethyl 3-(cyclohexyl(ethoxycarbonyl)amino)butanoate , ethyl 3-((ethoxycarbonyl)(ethyl)amino)-2-methylbutanoate, ethyl 3-((ethoxycarbonyl)(isobutyl)amino)-2-methylbutanoate, ethyl 3-((ethoxycarbonyl)(isopropyl)amino)-2-methylbutanoate, ethyl 3-((ethoxycarbonyl)(methyl)amino)-2-methylbutanoate, ethyl 3-((ethoxycarbonyl)(phenyl)amino)-2-methylbutanoate, ethyl 3-((ethoxycarbonyl)(propyl)amino)-2-methylbutanoate, ethyl 3-(tert-butyl(ethoxycarbonyl)amino)-2-methylbutanoate, ethyl 3-(butyl(ethoxycarbonyl)amino)-2-methylbutanoate, ethyl 3-(cyclohexyl(ethoxycarbonyl)amino)-2-methylbutanoate, ethyl 3-((ethoxycarbonyl)(ethyl)amino)-3-phenylpropanoate, ethyl 3-((ethoxycarbonyl)(ethyl)amino)-4,4-dimethylpentanoate, ethyl 3-((ethoxycarbonyl)(ethyl)amino)-4-methylpentanoate, ethyl 3-((ethoxycarbonyl)(ethyl)amino)-5-methylhexanoate, ethyl 3-((ethoxycarbonyl)(ethyl)amino)heptanoate, ethyl 3-((ethoxycarbonyl)(ethyl)amino)hexanoate, ethyl 3-((ethoxycarbonyl)(ethyl)amino)pentanoate, ethyl 3-((ethoxycarbonyl)(isobutyl)amino)-3-phenylpropanoate, ethyl 3-((ethoxycarbonyl)(isobutyl)amino)-4,4-dimethylpentanoate, ethyl 3-((ethoxycarbonyl)(isobutyl)amino)-4-methylpentanoate, ethyl 3-((ethoxycarbonyl)(isobutyl)amino)-5-methylhexanoate, ethyl 3-((ethoxycarbonyl)(isobutyl)amino)heptanoate, ethyl 3-((ethoxycarbonyl)(isobutyl)amino)hexanoate, ethyl 3-((ethoxycarbonyl)(isobutyl)amino)pentanoate, ethyl 3-((ethoxycarbonyl)(isopropyl)amino)-3-phenylpropanoate, ethyl 3-((ethoxycarbonyl)(isopropyl)amino)-4,4-dimethylpentanoate, ethyl 3-((ethoxycarbonyl)(isopropyl)amino)-4-methylpentanoate, ethyl 3-((ethoxycarbonyl)(isopropyl)amino)-5-methylhexanoate, ethyl 3-((ethoxycarbonyl)(isopropyl)amino)heptanoate, ethyl 3-((ethoxycarbonyl)(isopropyl)amino)hexanoate, ethyl 3-((ethoxycarbonyl)(isopropyl)amino)pentanoate, ethyl 3-((ethoxycarbonyl)(methyl)amino)-3-phenylpropanoate, ethyl 3-((ethoxycarbonyl)(methyl)amino)-4,4-dimethylpentanoate, ethyl 3-((ethoxycarbonyl)(methyl)amino)-4-methylpentanoate, ethyl 3-((ethoxycarbonyl)(methyl)amino)-5-methylhexanoate, ethyl 3-((ethoxycarbonyl)(methyl)amino)heptanoate, ethyl 3-((ethoxycarbonyl)(methyl)amino)hexanoate, ethyl 3-((ethoxycarbonyl)(methyl)amino)pentanoate, ethyl 3-((ethoxycarbonyl)(phenyl)amino)-3-phenylpropanoate, ethyl 3-((ethoxycarbonyl)(phenyl)amino)-4,4-dimethylpentanoate, ethyl 3-((ethoxycarbonyl)(phenyl)amino)-4-methylpentanoate, ethyl 3-((ethoxycarbonyl)(phenyl)amino)-5-methylhexanoate, ethyl 3-((ethoxycarbonyl)(phenyl)amino)heptanoate, ethyl 3-((ethoxycarbonyl)(phenyl)amino)hexanoate, ethyl 3-((ethoxycarbonyl)(phenyl)amino)pentanoate, ethyl 3-((ethoxycarbonyl)(propyl)amino)-3-phenylpropanoate, ethyl 3-((ethoxycarbonyl)(propyl)amino)-4,4-dimethylpentanoate, ethyl 3-((ethoxycarbonyl)(propyl)amino)-4-methylpentanoate, ethyl 3-((ethoxycarbonyl)(propyl)amino)-5-methylhexanoate, ethyl 3-((ethoxycarbonyl)(propyl)amino)heptanoate, ethyl 3-((ethoxycarbonyl)(propyl)amino)hexanoate, ethyl 3-((ethoxycarbonyl)(propyl)amino)pentanoate, ethyl 3-(tert-butyl(ethoxycarbonyl)amino)-3-cyclohexylpropanoate, ethyl 3-(tert-butyl(ethoxycarbonyl)amino)-3-phenylpropanoate, ethyl 3-(tert-butyl(ethoxycarbonyl)amino)-4,4-dimethylpentanoate, ethyl 3-(tert-butyl(ethoxycarbonyl)amino)-4-methylpentanoate, ethyl 3-(tert-butyl(ethoxycarbonyl)amino)-5-methylhexanoate, ethyl 3-(tert-butyl(ethoxycarbonyl)amino)heptanoate, ethyl 3-(tert-butyl(ethoxycarbonyl)amino)hexanoate, ethyl 3-(tert-butyl(ethoxycarbonyl)amino)pentanoate, ethyl 3-(butyl(ethoxycarbonyl)amino)-3-cyclohexylpropanoate, ethyl 3-(butyl(ethoxycarbonyl)amino)-3-phenylpropanoate, ethyl 3-(butyl(ethoxycarbonyl)amino)-4,4-dimethylpentanoate, ethyl 3-(butyl(ethoxycarbonyl)amino)-4-methylpentanoate, ethyl 3-(butyl(ethoxycarbonyl)amino)-5-methylhexanoate, ethyl 3-(butyl(ethoxycarbonyl)amino)heptanoate, ethyl 3-(butyl(ethoxycarbonyl)amino)hexanoate, ethyl 3-(butyl(ethoxycarbonyl)amino)pentanoate, ethyl 3-(cyclohexyl(ethoxycarbonyl)amino)-3-phenylpropanoate, ethyl 3-(cyclohexyl(ethoxycarbonyl)amino)-4,4-dimethylpentanoate, ethyl 3-(cyclohexyl(ethoxycarbonyl)amino)-4-methylpentanoate, ethyl 3-(cyclohexyl(ethoxycarbonyl)amino)-5-methylhexanoate, ethyl 3-(cyclohexyl(ethoxycarbonyl)amino)heptanoate, ethyl 3-(cyclohexyl(ethoxycarbonyl)amino)hexanoate, ethyl 3-(cyclohexyl(ethoxycarbonyl)amino)pentanoate, ethyl 3-cyclohexyl-3-((ethoxycarbonyl)(ethyl)amino)propanoate, ethyl 3-cyclohexyl-3-((ethoxycarbonyl)(isobutyl)amino)propanoate, ethyl 3-cyclohexyl-3-((ethoxycarbonyl)(isopropyl)amino)propanoate, ethyl 3-cyclohexyl-3-((ethoxycarbonyl)(methyl)amino)propanoate, ethyl 3-cyclohexyl-3-((ethoxycarbonyl)(phenyl)amino)propanoate, ethyl 3-cyclohexyl-3-((ethoxycarbonyl)(propyl)amino)propanoate, ethyl 3-cyclohexyl-3-(cyclohexyl(ethoxycarbonyl)amino)propanoate, propyl 3-((ethoxycarbonyl)(ethyl)amino)butanoate, propyl 3-((ethoxycarbonyl)(isobutyl)amino)butanoate, propyl 3-((ethoxycarbonyl)(isopropyl)amino)butanoate, propyl 3-((ethoxycarbonyl)(methyl)amino)butanoate, propyl 3-((ethoxycarbonyl)(phenyl)amino)butanoate, propyl 3-((ethoxycarbonyl)(propyl)amino)butanoate, propyl 3-(tert-butyl(ethoxycarbonyl)amino)butanoate, propyl 3-(butyl(ethoxycarbonyl)amino)butanoate, propyl 3-(cyclohexyl(ethoxycarbonyl)amino)butanoate, butyl 3-((ethoxycarbonyl)(ethyl)amino)butanoate, butyl 3-((ethoxycarbonyl)(isobutyl)amino)butanoate, butyl 3-((ethoxycarbonyl)(isopropyl)amino)butanoate, butyl 3-((ethoxycarbonyl)(methyl)amino)butanoate, butyl 3-((ethoxycarbonyl)(phenyl)amino)butanoate, butyl 3-(butyl(ethoxycarbonyl)amino)butanoate, butyl 3-(cyclohexyl(ethoxycarbonyl)amino)butanoate, isobutyl 3-((ethoxycarbonyl)(ethyl)amino)butanoate, isobutyl 3-((ethoxycarbonyl)(isobutyl)amino)butanoate, isobutyl 3-((ethoxycarbonyl)(isopropyl)amino)butanoate, isobutyl 3-((ethoxycarbonyl)(methyl)amino)butanoate, isobutyl 3-((ethoxycarbonyl)(phenyl)amino)butanoate, isobutyl 3-(butyl(ethoxycarbonyl)amino)butanoate, isobutyl 3-(cyclohexyl(ethoxycarbonyl)amino)butanoate, ethyl 2-((ethoxycarbonyl)(ethyl)amino)cyclopentane-1-carboxylate, ethyl 2-((ethoxycarbonyl)(isobutyl)amino)cyclopentane-1-carboxylate, ethyl 2-((ethoxycarbonyl)(isopropyl)amino)cyclopentane-1-carboxylate, ethyl 2-((ethoxycarbonyl)(methyl)amino)cyclopentane-1-carboxylate, ethyl 2-((ethoxycarbonyl)(phenyl)amino)cyclopentane-1-carboxylate, ethyl 2-(butyl(ethoxycarbonyl)amino)cyclopentane-1-carboxylate, ethyl 2-((ethoxycarbonyl)(ethyl)amino)cyclohexane-1-carboxylate, ethyl 2-((ethoxycarbonyl)(isobutyl)amino)cyclohexane-1-carboxylate, ethyl 2-((ethoxycarbonyl)(isopropyl)amino)cyclohexane-1-carboxylate, ethyl 2-((ethoxycarbonyl)(methyl)amino)cyclohexane-1-carboxylate, ethyl 2-((ethoxycarbonyl)(phenyl)amino)cyclohexane-1-carboxylate, ethyl 2-(butyl(ethoxycarbonyl)amino)cyclohexane-1-carboxylate, ethyl 3-(((benzyloxy)carbonyl)(butyl)amino)butanoate, ethyl 3-(((benzyloxy)carbonyl)(methyl)amino)butanoate, ethyl 3-((tert-butoxycarbonyl)(butyl)amino)butanoate, ethyl 3-((tert-butoxycarbonyl)(methyl)amino)butanoate, ethyl 3-((butoxycarbonyl)(butyl)amino)butanoate, ethyl 3-((butoxycarbonyl)(methyl)amino)butanoate, ethyl 3-((isobutoxycarbonyl)(methyl)amino)butanoate, ethyl 3-((isopropoxycarbonyl)(methyl)amino)butanoate, ethyl 3-((methoxycarbonyl)(methyl)amino)butanoate, ethyl 3-(butyl(isobutoxycarbonyl)amino)butanoate, ethyl 3-(butyl(isopropoxycarbonyl)amino)butanoate, ethyl 3-(butyl(methoxycarbonyl)amino)butanoate, ethyl 3-(butyl(phenoxycarbonyl)amino)butanoate, ethyl 3-(methyl(phenoxycarbonyl)amino)butanoate.

The compounds falling in formula (I) can be generally prepared by using the following two synthetic routes.

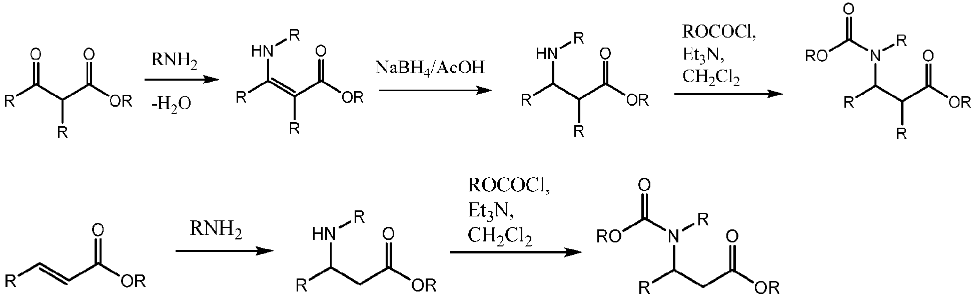

In solid catalyst component of the disclosure the amount of Ti atoms is preferably higher than 2.5%wt more preferably higher than 3.0% with respect to the total weight of said catalyst component.

As explained above, the catalyst components of the disclosure comprise, in addition to the above electron donors, Ti, Mg and halogen. In particular, the catalyst components comprise a titanium compound, having at least a Ti-halogen bond and the above mentioned electron donor compounds supported on a Mg halide. The magnesium halide is preferably MgCl₂ in active form which is widely known from the patent literature as a support for Ziegler-Natta catalysts. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the spectrum of the non-active halide is diminished in intensity and is replaced by a halo whose maximum intensity is displaced towards lower angles relative to that of the more intense line.

The preferred titanium compounds used in the catalyst component of the present disclosure are TiCl₄ and TiCl₃; furthermore, also Ti-haloalcoholates of formula Ti(OR⁷)_{m-y}X_{y} can be used, where m is the valence of titanium, y is a number between 1 and m-1, X is halogen and R⁷ is a hydrocarbon radical having from 1 to 10 carbon atoms.

The preparation of the solid catalyst component can be carried out according to several methods. One method comprises the reaction between magnesium alcoholates or chloroalcoholates (in particular chloroalcoholates prepared according to USP 4,220,554) and an excess of TiCl₄ in the presence of the electron donor compounds at a temperature of about 80 to 120°C.

According to a preferred method, the solid catalyst component can be prepared by reacting a titanium compound of formula Ti(OR⁷)_{m-y}X_{y}, where m is the valence of titanium and y is a number between 1 and m, preferably TiCl₄, with a magnesium chloride deriving from an adduct of formula MgCl₂•pR⁸OH, where p is a number between 0.1 and 6, preferably from 2 to 3.5, and R⁸ is a hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is lower than 3, preferably between 0.1 and 2.5. The reaction with the Ti compound can be carried out by suspending the adduct (dealcoholated or as such) in cold TiCl₄ (about 0°C); the mixture is heated up to 80-130°C and kept at this temperature for 0.5-2 hours. The treatment with TiCl₄ can be carried out one or more times. The electron donor compound is preferably added during the treatment with TiCl₄. The preparation of catalyst components in spherical form are described for example in European Patent Applications EP-A-395083, EP-A-553805, EP-A-553806, EPA601525 and WO98/44009.

The solid catalyst components obtained according to the above method show a surface area (by B.E.T. method) may range between 20 and 500 m²/g and preferably between 50 and 400 m²/g, and a total porosity (by B.E.T. method) higher than 0.2 cm³/g preferably between 0.2 and 0.6 cm³/g. The porosity (Hg method) due to pores with radius up to 10.000Å may range from 0.3 to 1.5 cm³/g, preferably from 0.45 to 1 cm³/g.

The solid catalyst component has an average particle size ranging from 5 to 120 µm and more preferably from 10 to 100 µm.

In any of these preparation methods the desired electron donor compounds can be added as such or, in an alternative way, it can be obtained *in situ* by using an appropriate precursor capable to be transformed in the desired electron donor compound by means, for example, of available chemical reactions.

Regardless of the preparation method used, the final amount of the electron donor compound of formula (I) is such that its molar ratio with respect to the Ti atoms is from 0.01 to 2, preferably from 0.05 to 1.5.

The solid catalyst components according to the present disclosure are converted into catalysts for the polymerization of olefins by reacting them with organoaluminum compounds according to available methods.

In particular, it is an object of the present disclosure a catalyst for the polymerization of olefins CH₂=CHR, in which R is hydrogen or a hydrocarbyl radical with 1-12 carbon atoms, comprising the product obtained by contacting:
(i) the solid catalyst component as disclosed above and
(ii) an alkylaluminum compound and optionally,
(iii) an external electron donor compound.

The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as AlEt₂Cl and Al₂Et₃Cl₃, possibly in mixture with the above cited trialkylaluminums.

The external electron-donor compounds can include silicon compounds, ethers, esters, amines, and heterocyclic compounds.

Another class of preferred external donor compounds is that of silicon compounds of formula (R⁸)ₐ(R¹⁰)_{b}Si(OR¹¹)_{c}, where a and b are integers from 0 to 2, c is an integer from 1 to 4 and the sum (a+b+c) is 4; R⁹, R¹⁰, and R¹¹, are radicals with 1-18 carbon atoms optionally containing heteroatoms. Particularly preferred are the silicon compounds in which a is 1, b is 1, c is 2, at least one of R⁹ and R¹⁰ is selected from branched alkyl, cycloalkyl or aryl groups with 3-10 carbon atoms optionally containing heteroatoms and R¹¹ is a C₁-C₁₀ alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane, N,N-diethylaminotriethoxysilane. Moreover, are also preferred the silicon compounds in which a is 0, c is 3, R¹⁰ is a branched alkyl or cycloalkyl group, optionally containing heteroatoms, and R¹¹ is methyl. Examples of such preferred silicon compounds are cyclohexyltrimethoxysilane, t-butyltrimethoxysilane and thexyltrimethoxysilane.

The electron donor compound (iii) is used in such an amount to give a molar ratio between the organoaluminum compound and said electron donor compound (iii) of from 0.1 to 500, preferably from 1 to 300 and more preferably from 3 to 100.

As explained, the catalyst components of the present disclosure, particularly when used in the polymerization of propylene in association with an aluminum alkyl compound and an alkyl alkoxysilane are able to produce polypropylene, under the polymerization conditions set forth in the experimental section, with an activity higher than 35 Kg/gcat preferably higher than 40 Kg/gcat and a xylene insolubility at 25°C higher than 96%, preferably higher than 97%.

Therefore, it constitutes a further object of the present disclosure a process for the (co)polymerization of olefins CH₂=CHR, in which R is hydrogen or a hydrocarbyl radical with 1-12 carbon atoms, carried out in the presence of a catalyst comprising the product of the reaction between:
(i) the solid catalyst component of the disclosure;
(ii) an alkylaluminum compound and,
(iii) optionally an electron-donor compound (external donor).

The polymerization process can be carried out according to available techniques for example slurry polymerization using as diluent an inert hydrocarbon solvent, or bulk polymerization using the liquid monomer (for example propylene) as a reaction medium. Moreover, it is possible to carry out the polymerization process in gas-phase operating in one or more fluidized or mechanically agitated bed reactors.

The polymerization may be carried out at temperature of from 20 to 120°C, preferably of from 40 to 80°C. When the polymerization is carried out in gas-phase the operating pressure may range between 0.5 and 5 MPa, preferably between 1 and 4 MPa. In the bulk polymerization the operating pressure ranges between 1 and 8 MPa, preferably between 1.5 and 5 MPa.

The following examples are given in order to further illustrate the disclosure without being intended as limiting it.

### CHARACTERIZATIONS

### Determination of X.I.

2.5 g of polymer and 250 ml of o-xylene were placed in a round-bottomed flask provided with a cooler and a reflux condenser and kept under nitrogen. The obtained mixture was heated to 135°C and was kept under stirring for about 60 minutes. The final solution was allowed to cool to 25°C under continuous stirring, and the insoluble polymer was then filtered. The filtrate was then evaporated in a nitrogen flow at 140°C to reach a constant weight. The content of said xylene-soluble fraction is expressed as a percentage of the original 2.5 grams and then, by difference, the X.I. %.

### Determination of donors.

The content of electron donor has been carried out via gas-chromatography. The solid component was dissolved in acidic water. The solution was extracted with ethyl acetate, an internal standard was added, and a sample of the organic phase was analyzed in a gas chromatograph, to determine the amount of donor present at the starting catalyst compound.

### Melt flow rate (MFR)

The melt flow rate MIL of the polymer was determined according to ISO 1133 (230°C, 2.16 Kg).

### EXAMPLES

### Procedure for preparation of the spherical adduct

An initial amount of microspheroidal MgCl₂.2.8C₂H₅OH was prepared according to the method described in Example 2 of WO98/44009, but operating on larger scale.

### General procedure for the polymerization of propylene

A 4-litre steel autoclave equipped with a stirrer, pressure gauge, thermometer, catalyst feeding system, monomer feeding lines and thermostating jacket, was purged with nitrogen flow at 70°C for one hour. Then, at 30°C under propylene flow, were charged in sequence with 75 mL of anhydrous hexane, 0.76 g of AlEt₃, dicyclopentyl dimethoxysilane as external electron donor in order to have a Al/Donor molar ratio of 20, and 0.006÷0.010 g of solid catalyst component. The autoclave was closed; subsequently 2.0 NL of hydrogen were added. Then, under stirring, 1.2 kg of liquid propylene was fed. The temperature was raised to 70°C in five minutes and the polymerization was carried out at this temperature for two hours. At the end of the polymerization, the non-reacted propylene was removed; the polymer was recovered and dried at 70°C under vacuum for three hours. Then the polymer was weighed and fractionated with o-xylene to determine the amount of the xylene insoluble (X.I.) fraction.

### General Procedure for the preparation of the solid catalyst component

Into a 500 cm³ round bottom flask, equipped with mechanical stirrer, cooler and thermometer 250 cm³ of TiCl₄ were introduced at room temperature under nitrogen atmosphere. After cooling to 0°C, while stirring, the internal donor of listed in table 1 and 10.0 g of the spherical adduct A were sequentially added into the flask. The amount of charged internal donor was such to charge a Mg/donor molar ratio of 6. The temperature was raised to 100°C and maintained for 2 hours. Thereafter, stirring was stopped, the solid product was allowed to settle and the supernatant liquid was siphoned off at 100°C. After the supernatant was removed, additional fresh TiCl₄ was added to reach the initial liquid volume again. The mixture was then heated at 120°C and kept at this temperature for 1 hour. Stirring was stopped again, the solid was allowed to settle and the supernatant liquid was siphoned off. The solid was washed with anhydrous hexane six times (6 x 100 cm³) in temperature gradient down to 60°C and one time (100 cm³) at room temperature. The obtained solid was then dried under vacuum. The so obtained solid catalyst components were tested in polymerization of propylene, using the procedure described above. The results are listed in Table 1.

### EXAMPLE 1-7 and comparative example 1

### Preparation of Solid Catalyst Component and polymerization

The general procedure for the preparation of the solid catalyst component 1 was carried out using the donor reported in table 1 as internal donor. The so obtained solid catalyst components were tested in polymerization of propylene, using the procedure described above. The results are listed in Table 1.

**Table 1**

| | **Catalyst compostion** | | | **Polymerization** | | |
|---|---|---|---|---|---|---|
| Ex | Internal Donor | | Ti | Activity | XI | MIL |
| | **Structure / Name** | **%wt** | **%wt** | **kg/g** | **%wt** | **g/10'** |
| 1 | 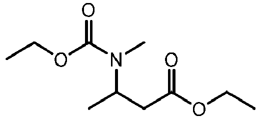 | 7.5 | 3.4 | 37.3 | 96.9 | 4.1 |
| 2 | 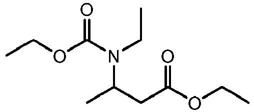 | 6.7 | 3.4 | 36.4 | 96.8 | 7.6 |
| 3 | 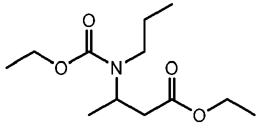 | 12.3 | 5.0 | 51.0 | 97.6 | 4.6 |
| 4 | 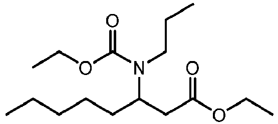 | 13.9 | 3.8 | 45.7 | 96.2 | 5.4 |
| 5 | 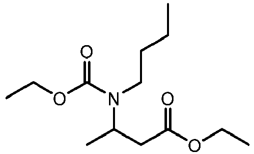 | n.d. | 3.6 | 42.0 | 97.2 | 5.8 |
| 6 | 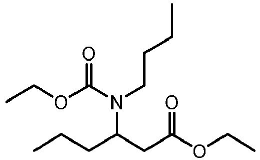 | 11.2 | 3.3 | 49.6 | 96.9 | 4.5 |
| 7 | 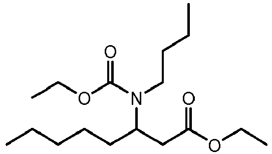 | n.d. | 3.8 | 48.5 | 96.3 | 5.0 |
| C1 | 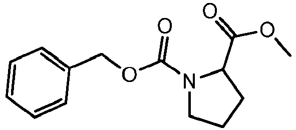 | n.d. | 5.4 | 13.0 | 93.1 | 6.9 |

| | | | | | | |
|---|---|---|---|---|---|---|
| nd: not determined | | | | | | |

## Claims

1. A catalyst component for the polymerization of olefins comprising Mg, Ti and an electron donor of formula (I) 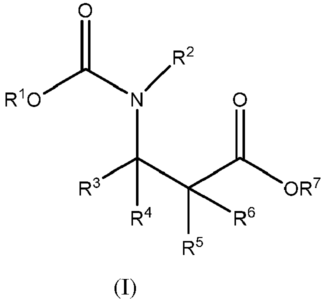 where the R¹ and R⁷ groups, equal to or different from each other, are selected from C₁-C₁₅ hydrocarbon groups, R² group is selected from C₁-C₁₀ hydrocarbon groups, R³ to R⁶ groups, independently, are selected from hydrogen or C₁-C₁₅ hydrocarbon groups which can be fused together to form one or more cycles.

2. The catalyst component according to claim 1 in which R¹ is a C₁-C₁₀ alkyl group.

3. The catalyst component according to claim 1 in which R² is selected from C₁-C₁₀ alkyl groups.

4. The catalyst component according to claim 3 in which R² is selected from C₃-C₁₀ alkyl groups.

5. The catalyst component according to claim 4 in which the C₃-C₁₀ alkyl groups are linear.

6. The catalyst component according to claim 1 in which R³ is selected from C₁-C₁₀ alkyl groups and R⁴ is hydrogen.

7. The catalyst component according to claim 6 in which R³ is selected from C₁-C₈ alkyl groups.

8. The catalyst component according to claim 5 in which R³ is selected from C₁-C₃ linear alkyl groups.

9. The catalyst component according to any of claims 1-8 in which R⁵ and R⁶ groups are hydrogen.

10. The catalyst component according to claim 1 in which R⁷ is a C₁-C₁₀ alkyl group.

11. The catalyst component according to claim 10 in which R⁷ is a primary alkyl group.

12. The catalyst component according to claim 1 in which R¹ and R⁷ are independently a C₁-C₁₀ alkyl group, R² is selected from C₃-C₁₀ linear alkyl groups, R³ is selected from linear C₁-C₈ alkyl groups and R⁴ to R⁶ are hydrogen.

13. A catalyst for the polymerization of olefins comprising the product of the reaction between:
(i) the solid catalyst component according to any of the preceding claims and
(ii) an alkylaluminum compound.

14. The catalyst according to claim 13 further comprising an external electron donor compound.

15. A process for the (co)polymerization of olefins CH₂=CHR, in which R is hydrogen or a hydrocarbyl radical with 1-12 carbon atoms, carried out in the presence of a catalyst system comprising the product of the reaction between:
i. the solid catalyst component according to any of the proceeding claims; and
ii. an alkylaluminum compound.

## Patentansprüche

1. Katalysatorkomponente für die Polymerisation von Olefinen, umfassend Mg, Ti und einen Elektronendonor mit der Formel (I) 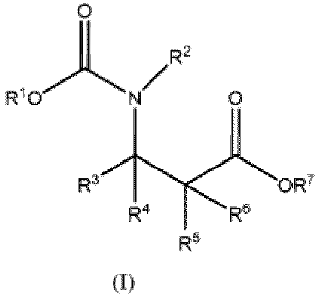 wobei die Gruppen R¹ und R⁷, die gleich oder voneinander verschieden sind, ausgewählt sind aus C₁- bis C₁₅-Kohlenwasserstoffgruppen, die Gruppe R² ausgewählt ist aus C₁- bis C₁₀-Kohlenwasserstoffgruppen, die Gruppen R³ bis R⁶ unabhängig ausgewählt sind aus Wasserstoff oder C₁- bis C₁₅-Kohlenwasserstoffgruppen, die miteinander kondensiert sein können, um einen oder mehrere Cyclen zu bilden.

2. Katalysatorkomponente nach Anspruch 1, wobei R¹ eine C₁- bis C₁₀-Alkylgruppe ist.

3. Katalysatorkomponente nach Anspruch 1, wobei R² ausgewählt ist aus C₁- bis C₁₀-Alkylgruppen.

4. Katalysatorkomponente nach Anspruch 3, wobei R² ausgewählt ist aus C₃- bis C₁₀-Alkylgruppen.

5. Katalysatorkomponente nach Anspruch 4, wobei die C₃- bis C₁₀-Alkylgruppen linear sind.

6. Katalysatorkomponente nach Anspruch 1, wobei R³ ausgewählt ist aus C₁- bis C₁₀-Alkylgruppen, und R⁴ Wasserstoff ist.

7. Katalysatorkomponente nach Anspruch 6, wobei R³ ausgewählt ist aus C₁- bis C₈-Alkylgruppen.

8. Katalysatorkomponente nach Anspruch 5, wobei R³ ausgewählt ist aus linearen C₁- bis C₃-Alkylgruppen.

9. Katalysatorkomponente nach einem der Ansprüche 1 bis 8, wobei die Gruppen R⁵ und R⁶ Wasserstoff sind.

10. Katalysatorkomponente nach Anspruch 1, wobei R⁷ eine C₁- bis C₁₀-Alkylgruppe ist.

11. Katalysatorkomponente nach Anspruch 10, wobei R⁷ eine primäre Alkylgruppe ist.

12. Katalysatorkomponente nach Anspruch 1, wobei R¹ und R⁷ unabhängig eine C₁- bis C₁₀-Alkylgruppe sind, R² ausgewählt ist aus linearen C₃- bis C₁₀-Alkylgruppen, R³ ausgewählt ist aus linearen C₁- bis C₈-Alkylgruppen, und R⁴ bis R⁶ Wasserstoff sind.

13. Katalysator zur Polymerisation von Olefinen, umfassend das Produkt der Reaktion zwischen:
(i) der festen Katalysatorkomponente gemäß einem der vorhergehenden Ansprüche und
(ii) einer Alkylaluminiumverbindung.

14. Katalysator nach Anspruch 13, ferner umfassend eine externe Elektronendonorverbindung.

15. Verfahren zur (Co)polymerisation von Olefinen CH₂=CHR, wobei R Wasserstoff oder ein Kohlenwasserstoffrest mit 1 bis 12 Kohlenstoffatomen ist, welches in Gegenwart eines Katalysatorsystems durchgeführt wird, welches das Produkt der Reaktion zwischen
i. der festen Katalysatorkomponente gemäß einem der vorhergehenden Ansprüche; und
ii. einer Alkylaluminiumverbindung ist.

## Revendications

1. Constituant catalytique pour la polymérisation d'oléfines comprenant du Mg, du Ti et un donneur d'électrons de formule (I) 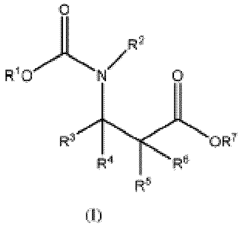 où les groupes R¹ et R⁷, identiques ou différents l'un de l'autre, sont choisis parmi les groupes hydrocarbonés en C₁-C₁₅, le groupe R² est choisi parmi les groupes hydrocarbonés en C₁-C₁₀, les groupes R³ à R⁶, indépendamment, sont choisis parmi hydrogène ou les groupes hydrocarbonés en C₁-C₁₅ qui peuvent être condensés ensemble pour former un ou plusieurs cycles.

2. Constituant catalytique selon la revendication 1, dans lequel R¹ représente un groupe alkyle en C₁-C₁₀.

3. Constituant catalytique selon la revendication 1, dans lequel R² est choisi parmi les groupes alkyle en C₁-C₁₀.

4. Constituant catalytique selon la revendication 3, dans lequel R² est choisi parmi les groupes alkyle en C₃-C₁₀.

5. Constituant catalytique selon la revendication 4, dans lequel les groupes alkyle en C₃-C₁₀ sont linéaires.

6. Constituant catalytique selon la revendication 1, dans lequel R³ est choisi parmi les groupes alkyle en C₁-C₁₀ et R⁴ représente hydrogène.

7. Constituant catalytique selon la revendication 6, dans lequel R³ est choisi parmi les groupes alkyle en C₁-C₈.

8. Constituant catalytique selon la revendication 5, dans lequel R³ est choisi parmi les groupes alkyle linéaires en C₁-C₃.

9. Constituant catalytique selon l'une quelconque des revendications 1 à 8, dans lequel les groupes R⁵ et R⁶ représentent hydrogène.

10. Constituant catalytique selon la revendication 1, dans lequel R⁷ représente un groupe alkyle en C₁-C₁₀.

11. Constituant catalytique selon la revendication 10, dans lequel R⁷ représente un groupe alkyle primaire.

12. Constituant catalytique selon la revendication 1, dans lequel R¹ et R⁷ représentent indépendamment un groupe alkyle en C₁-C₁₀, R² est choisi parmi les groupes alkyle linéaires en C₃-C₁₀, R³ est choisi parmi les groupes alkyle linéaires en C₁-C₈ et R⁴ à R⁶ représentent hydrogène.

13. Catalyseur pour la polymérisation d'oléfines, comprenant le produit de la réaction entre :
(i) le constituant catalytique solide selon l'une quelconque des revendications précédentes et
(ii) un composé d'alkylaluminium.

14. Catalyseur selon la revendication 13, comprenant en outre un composé donneur d'électrons externe.

15. Procédé pour la (co)polymérisation d'oléfines CH₂=CHR, dans lesquelles R représente hydrogène ou un radical hydrocarbyle comprenant 1 à 12 atomes de carbone, mis en œuvre en présence d'un système catalytique comprenant le produit de la réaction entre :
i. le constituant catalytique solide selon l'une quelconque des revendications ci-dessus ; et
ii. un composé d'alkylaluminium.
